# EUROPEAN PATENT APPLICATION

(11) **EP 2 552 049 A1**
(43) Date of publication of application: **30.01.2013**
(21) Application number: 11819285.5
(22) Date of filing: 27.01.2011
(51) Int. Cl.: H04L 9/32, H04L 29/06

(54) **AUTHENTICATION METHOD, APPARATUS AND SYSTEM**

(30) Priority: 23.08.2010 CN 201010260404
(71) Applicant: ZTE Corporation, Shenzhen, Guangdong 518057 (CN)
(72) Inventor: CUI, Zhenfeng, Shenzhen Guangdong 518057 (CN); LU, Jianfeng, Shenzhen Guangdong 518057 (CN)
(74) Representative: Waddington, Richard
(86) International application number: PCT/CN2011/070716
(87) International publication number: WO 2012/024910

(57) **Abstract**

The present invention discloses an authentication method, which includes: according to a received access request sent by a user equipment, an authentication gateway returning an access response message including temporary authentication information; the user equipment generating an authentication code according to the temporary authentication information included in the access response message; the user equipment sending an authentication request including the authentication code to the authentication gateway through an application server; when the verification of the authentication request is passed, the authentication gateway replying an authentication response including H(A1) encrypted information to the application server for cache. The present invention also discloses an apparatus and system corresponding to the aforementioned method. The first access request of the user equipment is authenticated by the authentication gateway and the subsequent authentications are implemented by the application server, which has little impact on the processing performance of system; after the access request is successfully authenticated by a unified authentication gateway, the H(A1) encrypted information including password information is sent to the application server and the subsequent authentications are implemented by the application server, which has little impact on the processing performance of system; the network resources are saved and the user experience is improved simultaneously.

## Description

### Technical Field

The present invention relates to the field of communication technologies, and more especially, to an authentication method, apparatus and system.

### Background of the Related Art

With the development of enterprise services, the number of enterprise service application systems is also increasing rapidly. The current implementation method of the enterprise service application system is that the user's password information is respectively saved by the application server of each service. When the user needs to access a different application server, the user first provides his/her own user password to the application server, and when the application server verifies that the user password is correct, the user can use the corresponding service.

In the specific implementation process, each time the user accesses the application server, the user must enter the user password into different application servers. When the number of the application systems has been multiplied, the user can use the service only after a plurality of inputs is performed, thus causing a waste of resources and the user experience being not good.

### Summary of the Invention

The main purpose of the present invention is to provide an authentication method for achieving unified authentication and an apparatus and system thereof, to prevent the user from entering the user password into different application servers, which causes bad user experience.

The present invention provides an authentication method, comprising:
an authentication gateway returning an access response message including temporary authentication information according to a received access request sent by a user equipment;
the user equipment generating an authentication code according to the temporary authentication information included in said access response message;
the user equipment sending an authentication request including said authentication code to the authentication gateway through an application server;
when verification of the authentication request is passed, the authentication gateway returning an authentication response including H(A1) encrypted information to the application server for cache.

After the authentication gateway returns the authentication response including the H(A1) encrypted information to the application server for cache, the method also comprises:
the application server processing the access request of the user equipment according to the authentication response and caching the H(A1) encrypted information.

After the application server processes the access request of the user equipment and caches the H(A1) encrypted information, the method also comprises:
the user equipment sending a second access request including the authentication information to the application server;
said application server using the H(A1) encrypted information to authenticate the second access request.

After said application server processes the access request of the user equipment and caches the H(A1) encrypted information, the method also comprises:
when predetermined time is exceeded, the user equipment sending a third access request including the authentication information to the application server;
said application server forwarding said third access request to the authentication gateway;
said authentication gateway returning a generated access response message including the temporary authentication information according to the third access request;
said user equipment generating the authentication code according to the temporary authentication information included in said access response message;
said user equipment sending the authentication request including said authentication code to the authentication gateway through the application server;
when verification of said authentication request is passed, said authentication gateway returning an authentication response including new H(A1) encrypted information to the application server;
said application server processing the access request of the user equipment and caching said new H(A1) encrypted information.

Before the authentication gateway returns the access response message including the temporary authentication information according to the received access request sent by the user equipment, the method also comprises:
the user equipment sending the access request to the application server;
the application server forwarding the access request to the authentication gateway.

The present invention also provides an application server, comprising:
a receiving module, configured to receive an authentication request including an authentication code sent by a user equipment, and receive an authentication response including H(A1) encrypted information returned by an authentication gateway according to the authentication request including the authentication code;
a forwarding module, configured to forward said authentication request including the authentication code to the authentication gateway;
a caching module, configured to cache the H(A1) encrypted information.

Said apparatus also comprises:
a processing module, configured to process an access request of the user equipment based on the authentication response.

Said receiving module is also configured to receive a second access request including authentication information sent by the user equipment;
said processing module is also configured to use the H(A1) encrypted information to authenticate the second access request.

Said receiving module is also configured to: when predetermined time is exceeded, receive a third access request including the authentication information sent by the user equipment, and receive the authentication code generated by the user equipment according to temporary authentication information included in the access response message, and when verification of said authentication request is passed, receive the authentication response including new H(A1) encrypted information replied by the authentication gateway;
the forwarding module is also configured to forward said third access request to the authentication gateway, and forward the access response message including the temporary authentication information generated and returned by the authentication gateway according to the third access request to the user equipment, and forward the authentication request including the authentication code to the authentication gateway;
the caching module is also configured to cache said new H(A1) encrypted information.

Said receiving module is also configured to receive the access request sent by the user equipment;
the forwarding module is also configured to send the access request to the authentication gateway.

The present invention also provides an authentication gateway, comprising:
a receiving module, configured to receive an access request and/or an authentication request including an authentication code sent by user equipment through an application server;
a responding module, configured to return an access response message including temporary authentication information according to the access request;
a verifying module, configured to verify the authentication request including the authentication code;
a transmitting module, configured to send and reply an authentication response including H(A1) encrypted information to the application server when verification of said authentication request is passed.

Said receiving module is also configured to receive an authentication request and/or an authentication code forwarded by the user equipment through the application server.

The present invention also provides an authentication system, comprising:
an application server, configured to receive said access request and/or authentication request and forward the request to the authentication gateway, receive and forward an access response message sent by the authentication gateway, receive an authentication response including H(A1) encrypted information sent by the authentication gateway, and cache said H(A1) encrypted information;
the authentication gateway, configured to return an access response message including temporary authentication information according to the access request, and reply the authentication response including the H(A1) encrypted information when verification of said authentication request is passed.

Said system also comprises:
a user equipment, configured to send the access request, receive the access response information, generate an authentication code according to the temporary authentication information included in the access response message, and send an authentication request including said authentication code.

The present invention uses the method in which the first access request of the user equipment is authenticated by the authentication gateway and the subsequent authentications are implemented by the application server, thus it has little impact on the processing performance of the original system; when the access request of user equipment passes the authentication by the unified authentication gateway, the H(A1) encrypted information containing the password information is sent to the application server, and the subsequent authentication is achieved by the application server; thus preventing the user from entering the user password to different application servers, saving the network resources and improving the user experience.

### Brief Description of Drawings

FIG. 1 is a flow chart of an embodiment of authentication method in accordance with the present invention;
FIG. 2 is a flow chart of another embodiment of authentication method in accordance with the present invention;
FIG. 3 is a structure diagram of an embodiment of application server in accordance with the present invention;
FIG. 4 is a structure diagram of an embodiment of authentication gateway in accordance with the present invention;
FIG. 5 is a structure diagram of an embodiment of authentication system in accordance with the present invention.

### Preferred Embodiments of the Present Invention

It should be understood that the specific embodiments described herein are only used to explain the present invention rather than limit the present invention.

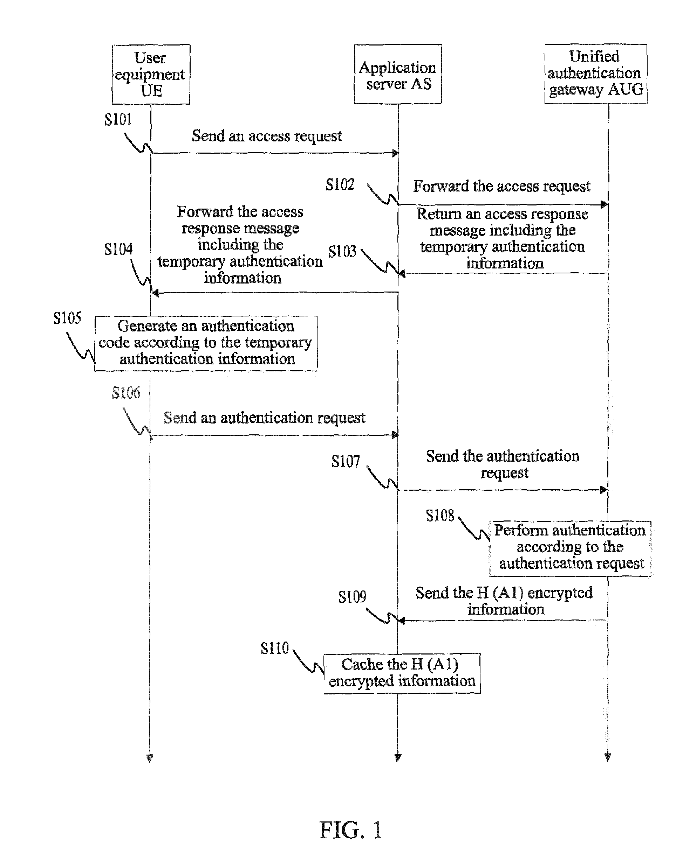

FIG. 1 is a flow chart of an embodiment of authentication method in accordance with the present invention.

Step S101, the user equipment sends an access request to the application server;
when the user equipment needs to initiate a certain service, it first sends an access request to the application server.
Step S102, the application server forwards the access request to the authentication gateway;
after the application server receives the access request sent by the user equipment, it forwards an access request including the domain name of application server to the authentication gateway according to the preset rules.
Step S103, the authentication gateway returns an access response message including the temporary authentication information;
since the access request does not contain the authentication information, after the authentication gateway receives the access request, it can reply the response message to require the user equipment to perform the authentication, for example, a 401 message can be used as the access response message which includes temporary authentication random code information.
Step S104, the application server forwards the access response message including the temporary authentication information to the user equipment;
according to the address direction in the 401 message, the application server forwards the 401 message to the user equipment.

Step S105, the user equipment generates an authentication code according to the temporary authentication information;
after the user equipment receives the 401 message, it obtains the accompanying temporary authentication information, and the user is prompted to input the user password; then an authentication code is generated by utilizing the user password and the temporary authentication information.

Step S106, the user equipment sends an authentication request to the application server;
after the user equipment generates the authentication code, it sends an authentication request to the application server, wherein the authentication request includes the authentication code.

Step S107, the application server forwards the authentication request to the authentication gateway;
after the application server receives the authentication request, it forwards the authentication request to the authentication gateway, and the authentication request includes the authentication code and the domain name of application server.

Step S108, the authentication gateway performs authentication according to the authentication request;
after the authentication gateway receives the authentication request, it obtains the authentication code included in the request and performs authentication according to the authentication code. The specific authentication process is: the authentication gateway calculates the authentication gateway authentication code according to the pre-stored user password and the preset rules, and compares that authentication gateway authentication code with the obtained authentication code included in the authentication request, when the comparison result is the same, the authentication is passed, proceed to step S109.

Step S109, the authentication gateway sends the H(A1) encrypted information to the application server;
the authentication gateway verifies the authentication information of user equipment, and if the authentication is passed, the H(A1) encrypted information is calculated by using the user name, password, domain name of application server and other information, and the authentication result and the H(A1) encrypted information are sent together to the application server. In order to ensure the security of the H(A1) encrypted information, a symmetric encryption algorithm such as DES, 3DES, AES and so on can be used.

Step S110, the application server caches the H(A1) encrypted information.

After the application server receives the authentication result and the H(A1) encrypted information sent by the authentication gateway, it processes the request of user equipment according to the authentication result and caches the H(A1) encrypted information.

Therefore, when the user equipment re-initiates an authentication request, the application server can process the authentication request of user equipment according to the cached H(A1) encrypted information, and it does not need the user equipment to initiate the authentication several times according to a number of services.

The present invention uses the method in which the first access request of the user equipment is authenticated by the authentication gateway and the subsequent authentications are implemented by the application server, thus it has little impact on the processing performance of the original system; when the access request of user equipment passes the authentication by the unified authentication gateway, the H(A1) encrypted information containing the password information is sent to the application server, and the subsequent authentication is achieved by the application server, thus it has little impact on the processing performance of the original system; thereby preventing the user from entering the user password to different application servers, saving the network resources and improving the user experience.

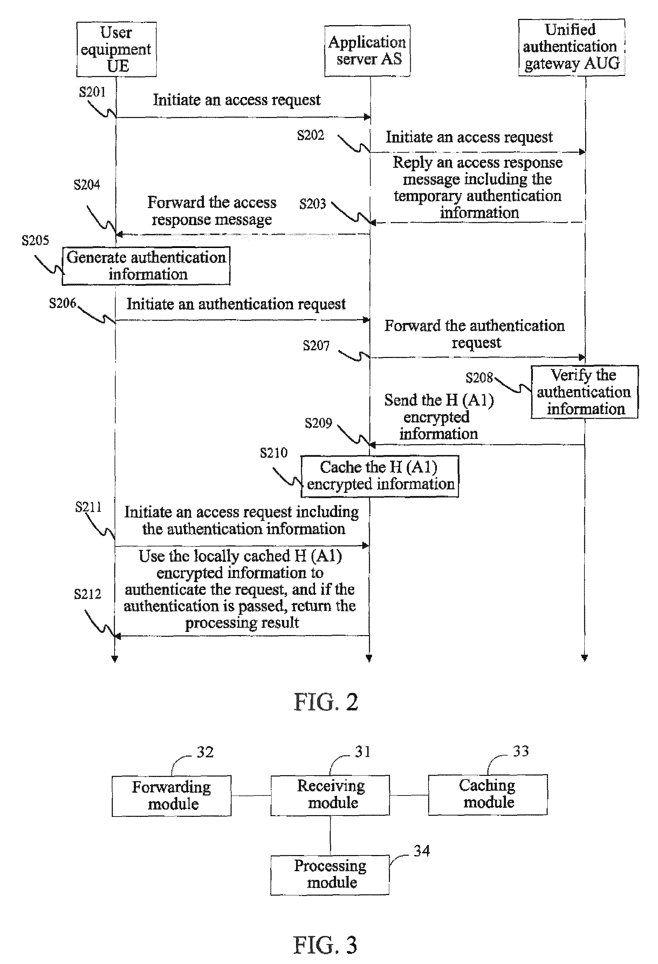

FIG. 2 is a flow chart of an embodiment of authentication method in accordance with the present invention;

FIG. 2 illustrates the process of implementing the authentication method in the present invention by taking the user equipment accessing a particular application server as an example, and it comprises the following steps:
step S201, the user equipment initiates an access request to the application server;
when the user equipment needs to use the service provided by the application server, it initiates an access request to the application server;
Step S202, the application server forwards the access request to the authentication gateway;
the application server first determines whether the user's authentication information is saved locally or not; if the user's authentication information is not saved locally, the application server forwards the access request to the authentication gateway, and the domain name of application server itself is included in the request;
step S203, the authentication gateway replies the access response information including the temporary authentication information;
since the access request does not contain the authentication information, the authentication gateway can reply the 401 information as the access response information which includes the temporary authentication random code information;
step S204, the application server forwards the access response message to the user equipment;
the application server transparently sends the 401 information and the temporary authentication random code information replied by the authentication gateway to the user equipment;
step S205, the user equipment generates the authentication information;
the user equipment uses the password input by the user and the authentication random code of the authentication gateway to calculate and obtain the authentication information.
Step S206, the user equipment initiates an authentication request;
the user equipment initiates an authentication request including the authentication information.
Step S207, the application server forwards the authentication request to the authentication gateway;
the application server forwards the authentication request including the authentication information to the authentication gateway, and the authentication request also includes the domain name of the application server itself;
step S208, the authentication gateway verifies the authentication information;
the authentication gateway verifies the authentication information of user equipment, and if the authentication is passed, the H(A1) encrypted information is calculated by using the user name, password, domain name of application server and other information, and the authentication result and the H(A1) encrypted information are sent together to the application server. In order to ensure the security of the H(A1), a symmetric encryption algorithm such as DES, 3DES, AES and so on can be used, but the specific implementation is not limited herein.
Step S209, the authentication gateway sends the H(A1) encrypted information to the application server;
if the authentication is passed, the authentication gateway can use the user name, the password, the domain name of application server and other information to calculate the H(A1) encrypted information, and sends the authentication result and the H(A1) encrypted information together to the application server.
Step S210, the application server caches the H(A1) encrypted information;
if the authentication is passed, the application server processes the access request of user equipment and caches the H(A1) encrypted information to authenticate the subsequent access requests of user equipment. Then the application server returns the processing result, and assigns the application server's own authentication random code.
Step S211, the user equipment re-initiates an access request including the authentication information to the application server;
step S212, the application server uses the locally cached H(A1) encrypted information to authenticate the request, and if the authentication is passed, the processing result is returned.

Specifically, the application server can obtain the authentication gateway authentication code according to the H(A1) encrypted information, and when the user equipment re-initiates the authentication, the application server can obtain the authentication code calculated by the user equipment according to the user password, and then compares the user equipment authentication code with the authentication gateway authentication code, and when they are consistent, the authentication is passed, otherwise, the authentication fails.

Furthermore, in step S209, after the application server caches the H(A1) encrypted information and the predetermined time is exceeded, when the user equipment re-initiates an access request, the step S201 is utilized to re-initiate one authentication, and when the authentication is passed, the authentication gateway sends new H(A1) encrypted information to the application server, and the application server caches the new H(A1) encrypted information.

Since the user password is stored in the authentication gateway, but in fact the majority of authentications are completed by the application server, there is a problem that the application server and the authentication gateway have different passwords when the user modifies the saved password of authentication gateway. To solve the problem, the embodiment of the present invention provides an implementation policy of quasi-real-time password synchronization:
there is timeliness for the H(A1) encrypted information saved in the application server (for example, the validity period is 5 minutes), if the time period from the last time point when the H(A1) encrypted information was obtained is within this range, then the local information of the application server is used to authenticate the request of user equipment, and when that time period is exceeded, the request of user equipment is forwarded to the authentication gateway in accordance with the process shown in FIG. 2, and the authentication gateway implements the authentication for the user equipment, and the application server obtains the latest H(A1) encrypted information again.
1, if the first signaling of user login nature can be identified, the authentication is performed compulsorily through the authentication gateway rather than the application server while processing the login request, and the user's authentication information is sent to the authentication gateway, and after the user password is changed, the user merely needs to re-log in with the new password to make the synchronization come into force;
2, when the aforementioned method cannot meet the requirements, the requirements can be met by setting the validity period (for example 5 minutes) of the H(A1) authentication information. That is, when the H(A1) information expires, the application server will once again authenticate the access request of user equipment through the authentication gateway in order to obtain the latest H(A1) information. When the user password is modified through the policy, the new password can take into effect just by waiting for five minutes.

In the aforementioned process, only when the authentication which is performed by the authentication gateway on the access request of user equipment is passed, is the H(A1) encrypted information sent to the application server, and it can be returned through the symmetric encryption according to the requirement of security, so as to greatly enhance the security of the authentication; since the access request of user equipment is not always authenticated through the authentication gateway at each time, the processing capacity of the authentication gateway can be greatly enhanced, and thus there is little impact on the performance of application server; in addition, since the authentication method provided in the embodiment of the present invention is transparent to the user equipment, the modification of system does not involve a plenty of terminal equipment, so the implementation method is simple.

FIG. 3 is a schematic diagram of an embodiment of application server in accordance with the present invention; the application server provided in the embodiment of the present invention comprises:
a receiving module 31, configured to receive an authentication request including an authentication code sent by a user equipment, and receive an authentication response including H(A1) encrypted information returned by an authentication gateway according to the authentication request including the authentication code;
a forwarding module 32, configured to forward said authentication request including the authentication code to the authentication gateway;
a caching module 33, configured to cache the H(A1) encrypted information.

Furthermore, said apparatus also comprises:
a processing module 34, configured to process an access request of the user equipment based on the authentication response.

Furthermore, said receiving module 31 is also configured to receive a second access request including authentication information sent by the user equipment;
said processing module 33 is also configured to use the H(A1) encrypted information to authenticate the second access request.

Furthermore, said receiving module 31 is also configured to: when predetermined time is exceeded, receive a third access request including the authentication information sent by the user equipment, and receive the authentication code generated by the user equipment according to temporary authentication information included in the access response message, and when verification of said authentication request is passed, receive the authentication response including new H(A1) encrypted information replied by the authentication gateway;
the forwarding module 32 is also configured to forward said third access request to the authentication gateway, and forward the access response message including the temporary authentication information generated and returned by the authentication gateway according to the third access request to the user equipment, and forward the authentication request including the authentication code to the authentication gateway;
the caching module 33 is also configured to cache said new H(A1) encrypted information.

Furthermore, said receiving module 31 is also configured to receive the access request sent by the user equipment;
the forwarding module 32 is also configured to send the access request to the authentication gateway.

When the user equipment needs to use the service provided by the application server, it sends an access request to the application server, and the receiving module 31 receives the access request, and then the forwarding module 32 first determine whether the user's authentication information is stored locally or not; when the user's authentication information is stored locally, the access request is forwarded to the authentication gateway, and the access request also includes the domain name of application server itself. The authentication gateway replies access response information including the temporary authentication information according to the access request, and the receiving module 31 receives the access response information. The forwarding module 32 forwards the access response information to the user equipment. After the user equipment receives the access request, it can send an authentication request including the authentication information again, after the receiving module 31 receives the authentication request, it sends the request to the forwarding module 32 to forward the authentication request to the authentication gateway, and when the forwarding module 32 forwards the authentication request, the authentication request also includes the domain name of application server.

After the authentication request including the authentication information arrives at the authentication gateway to be authenticated, the authentication gateway can return the authentication result and the H(A1) encrypted information to the receiving module 31; after the processing module 34 processes the authentication request according to the authentication result, the forwarding module 32 forwards the authentication result to the user equipment. The caching module 33 caches the H(A1) encrypted information for the authentication of the subsequent access requests of user equipment. After the caching module 33 caches the H(A1) encrypted information, if the predetermined time is exceeded, when the user equipment initiates the access request again, said receiving module 31 is also configured to receive a third access request including the authentication information sent by the user equipment when the predetermined time is exceeded, and receive the authentication code generated by the user equipment according to the temporary authentication information included in said access response message, and when the verification of the authentication request is passed, receive an authentication response including the new H(A1) encrypted information replied by the authentication gateway; the forwarding module 32 is also configured to forward said third access request to the authentication gateway, and forward the access response message including the temporary authentication information generated and returned by the authentication gateway according to said third access request to the user equipment, and forward the authentication request including said authentication code to the authentication gateway; the caching module 33 is also configured to cache said new H(A1) encrypted information.

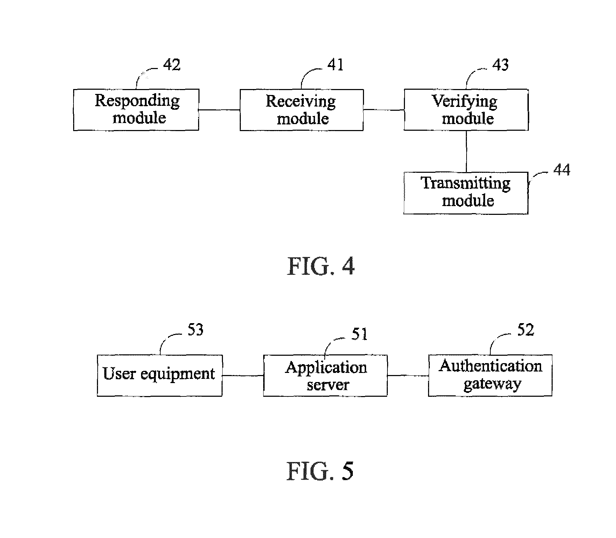

FIG. 4 is a structure diagram of an embodiment of authentication gateway in accordance with the present invention; and the authentication gateway provided in the embodiment of the present invention comprises:
a receiving module 41, configured to receive an access request and/or an authentication request including an authentication code sent by user equipment through an application server;
a responding module 42, configured to return an access response message including temporary authentication information according to the access request;
a verifying module 43, configured to verify the authentication request including the authentication code;
a transmitting module 44, configured to send and reply an authentication response including H(A1) encrypted information to the application server when verification of said authentication request is passed.

Furthermore, said receiving module 41 is also configured to receive an authentication request and an authentication code forwarded by the user equipment through the application server.

After the receiving module 41 receives the access request, since the access request does not comprise the authentication information, the transmitting module 44 can reply the 401 information as the access response information which includes the temporary authentication random code information; after the receiving module 41 receives the authentication request including the authentication information as well as the domain name of application server, the verifying module 43 verifies the authentication information of user equipment, and if the authentication is passed, the H(A1) encrypted information is calculated by using the user name, password, domain name of application server and other information, and the transmitting module 44 sends the authentication result and the H(A1) encrypted information together to the application server. In order to ensure the security of the H(A1), a symmetric encryption algorithm such as DES, 3DES, AES and so on can be used, but the specific implementation is not limited herein.

Referring to FIG. 5, it is a structure diagram of an embodiment of authentication system in accordance with the present invention; the authentication system provided in the embodiment of the present invention comprises:
an application server 51, configured to receive said access request and/or authentication request and forward the request to the authentication gateway 52, receive and forward an access response message sent by the authentication gateway 52, receive an authentication response including H(A1) encrypted information sent by the authentication gateway 52, and cache said H(A1) encrypted information.

Furthermore, the authentication system provided in the embodiment of the present invention can also comprise:
a user equipment 53, configured to send the access request, receive the access response information, generate an authentication code according to the temporary authentication information included in the access response message and send an authentication request including said authentication code.

The authentication gateway 52 is configured to return an access response message including the temporary authentication information according to the access request, and return an authentication response including the H(A1) encrypted information when the verification of said authentication request is passed.

The application server 51 in the embodiment of the present invention can be the application server provided in the corresponding embodiment of FIG. 3; and the authentication gateway 53 can be the authentication gateway provided in the corresponding embodiment of FIG. 4.

The above description is only the preferred embodiments of the present invention and is not used to limit the patent scope of the present invention, and any equivalent structure or equivalent process transformation made according to the content of the specification and accompanying drawings of the present invention should be included within the patent protection scope of the present invention regardless it is directly or indirectly used in other related technical fields.

## Claims

1. An authentication method, comprising:
an authentication gateway returning an access response message including temporary authentication information according to a received access request sent by a user equipment;
the user equipment generating an authentication code according to the temporary authentication information included in said access response message;
the user equipment sending an authentication request including said authentication code to the authentication gateway through an application server;
when verification of the authentication request is passed, the authentication gateway replying an authentication response including H(A1) encrypted information to the application server for cache.

2. The method of claim 1, wherein the authentication gateway replying the authentication response including the H(A1) encrypted information to the application server for cache is:
the application server processing the access request of the user equipment according to the authentication response and caching the H(A1) encrypted information.

3. The method of claim 2, wherein, after the application server processes the access request of the user equipment and caches the H(A1) encrypted information, the method further comprises:
the user equipment sending a second access request including authentication information to the application server;
said application server using the H(A1) encrypted information to authenticate the second access request.

4. The method of claim 2, wherein, after said application server processes the access request of the user equipment and caches the H(A1) encrypt information, said method further comprises:
when predetermined time is exceeded, the user equipment sending a third access request including authentication information to the application server;
said application server forwarding said third access request to the authentication gateway;
said authentication gateway returning a generated access response message including the temporary authentication information according to the third access request;
said user equipment generating the authentication code according to the temporary authentication information included in said access response message;
said user equipment sending the authentication request including said authentication code to the authentication gateway through the application server;
when the verification of said authentication request is passed, said authentication gateway replying an authentication response including new H(A1) encrypted information to the application server;
said application server processing the access request of the user equipment and caching said new H(A1) encrypted information.

5. The method of claim 1, wherein, before the authentication gateway returns the access response message including the temporary authentication information according to the received access request sent by the user equipment, said method further comprises:
the user equipment sending the access request to the application server;
the application server forwarding the access request to the authentication gateway.

6. An application server, comprising:
a receiving module, configured to receive an authentication request including an authentication code sent by a user equipment, and receive an authentication response including H(A1) encrypted information returned by an authentication gateway according to the authentication request including the authentication code;
a forwarding module, configured to forward said authentication request including the authentication code to the authentication gateway;
a caching module, configured to cache the H(A1) encrypted information.

7. The application server of claim 6, wherein, said apparatus further comprises:
a processing module, configured to process an access request of the user equipment according to the authentication response.

8. The application server of claim 7, wherein, said receiving module is further configured to receive a second access request including authentication information sent by the user equipment;
said processing module is further configured to use the H(A1) encrypted information to authenticate the second access request.

9. The application server of claim 6, wherein, said receiving module is further configured to: when predetermined time is exceeded, receive a third access request including authentication information sent by the user equipment, and receive the authentication code generated by the user equipment according to temporary authentication information included in an access response message, and when verification of said authentication request is passed, receive the authentication response including new H(A1) encrypted information replied by the authentication gateway;
the forwarding module is further configured to forward said third access request to the authentication gateway, and forward the access response message including the temporary authentication information generated and returned by the authentication gateway according to the third access request to the user equipment, and forward the authentication request including the authentication code to the authentication gateway;
the caching module is further configured to cache said new H(A1) encrypted information.

10. The application server of claim 6, wherein, said receiving module is further configured to receive an access request sent by the user equipment;
the forwarding module is further configured to send the access request to the authentication gateway.

11. An authentication gateway, comprising:
a receiving module, configured to receive an access request and/or an authentication request including an authentication code sent by user equipment through an application server;
a responding module, configured to return an access response message including temporary authentication information according to the access request;
a verifying module, configured to verify the authentication request including the authentication code;
a transmitting module, configured to send and reply an authentication response including H(A1) encrypted information to the application server when verification of said authentication request is passed.

12. The authentication gateway of claim 11, wherein, said receiving module is further configured to receive the authentication request and/or the authentication code forwarded by the user equipment through the application server.

13. An authentication system, comprising:
an application server, configured to receive and forward an access request and/or an authentication request to an authentication gateway, receive and forward an access response message sent by the authentication gateway, receive an authentication response including H(A1) encrypted information sent by the authentication gateway, and cache said H(A1) encrypted information;
the authentication gateway, configured to return the access response message including temporary authentication information according to the access request, and reply the authentication response including the H(A1) encrypted information when verification of said authentication request is passed.

14. The system of claim 13, wherein, said system further comprises:
a user equipment, configured to send the access request, receive access response information, generate an authentication code according to the temporary authentication information included in the access response message, and send an authentication request including said authentication code.

15. The system of claim 13, wherein, said application server is said application server in any one of claims 6∼10.

16. The system of claim 13, wherein, said authentication gateway is said authentication gateway in claim 11 or 12.
